# EUROPEAN PATENT APPLICATION

(11) **EP 4 391 109 A1**
(43) Date of publication of application: **26.06.2024**
(21) Application number: 22216083.0
(22) Date of filing: 22.12.2022
(51) Int. Cl.: H01M 4/134, H01M 4/38, H01M 10/052, H01M 10/0567, H01M 10/0568, H01M 10/0569

(54) **BATTERY CELL**

(71) Applicant: Belenos Clean Power Holding AG, 2502 Bienne (CH)
(72) Inventor: METTAN, Yoann, 1902 Evionnaz (CH)
(74) Representative: ICB SA

(57) **Abstract**

The present invention relates to battery cells comprising a cathode current collector, a cathode, an anode current collector, optionally an anode, and a solid state electrolyte comprising a non-aqueous solvent, an aluminium-based halogenated compound AlXₙ and/or a polymeric form thereof, wherein X is a halogen atom and n is between 1 and 6, a metal salt of the alkali metal, the alkaline earth metal or the metal of Group Ib, Group IIb, or Group IIIa of the periodic table, and a bis(fluorosulfonyl)imide anion.

## Description

### Technical field of the invention

The present invention relates to battery cells and batteries comprising a solid state electrolyte.

### Background

Recently, the development and improvement of batteries for various devices requiring batteries, such as mobile phones, wireless household appliances and electric vehicles and bikes, has become an important field of research and interest. In particular the field of secondary batteries is advancing, by the development of smaller and lighter batteries, having an improved lifetime.

In accordance with these recent development, a lithium secondary battery with lithium metal as active material has attracted attention. Lithium metal is known to have the characteristics of a low redox potential (-3.045 V vs. standard hydrogen electrode) as well as a high weight energy density (3860 mAh/g), which makes lithium metal an interesting material for the negative electrode (anode).

It is known to use lithium metal as a negative electrode by attaching a lithium foil to the anode current collector. However, as lithium is an alkali metal, it reacts with water and oxygen because of its high reactivity. This has the disadvantage that such batteries are considered unsafe, because of the risk of its explosion upon, for example, a leak to the environment. The handling of lithium foils is further also dangerous.

Further, upon exposure of lithium metal to the atmosphere, an oxide layer is typically formed as a result of oxidation. Such an oxide layer tends to act as an insulator, thereby increasing the electric resistance and thus reducing the performance of the battery.

In other to solve this issue, anode-free battery cells have been developed. Such battery cells comprise typically only an anode current collector, and a lithium layer as anode is formed (deposited) in-situ on the anode current collector during the first charging of the battery.

US2016/0261000 discloses an anode-free rechargeable battery comprising an anode current collector, a separator and a cathode. The battery further comprises a liquid electrolyte including a salt or salt mixture containing an active metallic cation (e.g. lithium ion) dissolved in a non-aqueous solvent, solvent mixture or a polymer. The separator can be infused with the electrolyte. During charging of the battery, the anode is formed in situ on the surface of the anode current collector.

A disadvantage of the above-described electrolyte is that the electrolyte is liquid, which may lead to leakage of the electrolyte from the battery, resulting in loss of functionality. Another disadvantage is that the metallic (e.g. lithium) ions may interact with the solvent, thereby reducing the amount of ions available for deposition of the anode layer in situ, and the charging and discharging of the battery.

US2020/0203757 discloses a lithium secondary battery comprising a positive electrode, a negative electrode current collector, a separator and an electrolyte interposed between the electrodes. The electrolyte is a gel polymer electrolyte and can be cross-linked. The gel polymer electrolyte comprises a polymer matrix, and a lithium salt dissolvent in an organic solvent. A lithium metal layer is formed in situ on the negative electrode current collector during charging.

A disadvantage of the gel polymer electrolyte is that the lithium ion conductivity thereof is known to be low, such as typically less than 1 mS/cm.

### Summary of the invention

It is an aim of the present invention to overcome one or more of the foregoing drawbacks. It is an aim of the present invention to provide a battery cell having an improved functionality compared to battery cells of the art.

It is an aim to provide a battery cell that can resist multiple charging/discharging cycles, and that shows an excellent conductivity.

According to a first aspect of the present invention, there is provided a battery cell as set out in the appended claims.

The battery cell comprises a cathode current collector, a cathode, a solid state electrolyte and an anode current collector or an electronic conductor.

The cathode current collector can be any cathode current collector known in the art. For example the cathode current collector can comprise or substantially consist of aluminium.

Advantageously, the cathode comprises an active material. Advantageously, the active material comprises or substantially consists of one or more of an alkali metal, an alkaline earth metal, or a metal of Group Ib, Group IIb, or Group IIIa of the periodic table.

Advantageously, the cathode further comprises an electronically conductive compound. The electronically conductive compound can be any electrically conductive compound known in the art.

Advantageously, the cathode further comprises a binder. The binder can be any binder known in the art.

Advantageously, the solid state electrolyte comprises a non-aqueous solvent, an aluminium-based halogenated compound AlXₙ and/or a polymeric form thereof, a metal salt and a bis(fluorosulfonyl)imide (FSI) anion.

Advantageously, the metal salt is a metal salt of an alkali metal, an alkaline earth metal or a metal of Group Ib, Group IIb, or Group IIIa of the periodic table. Advantageously, the metal of the metal salt is lithium, sodium, magnesium, aluminium, zinc or silver. In other words, the metal salt advantageously is a lithium salt, a sodium salt, a magnesium salt, an aluminium salt, a zinc salt, or a silver salt.

The metal of the metal salt can be the same or different than the metal comprised in the cathode. When the solid state electrolyte (SSE) comprises two or more metal salts, the metal thereof can be the same or different, and can be the same or different than the metal comprised in the cathode. For example, without being limited thereto, the SSE can comprise two lithium salts, or a combination of a lithium salt and a magnesium salt.

Advantageously, and as is known, the metal salt comprises an anion. As is known, a metal salt advantageously also comprises a cation. Advantageously, the cation is a cation of the metal of the metal salt. For example, when the metal salt is a lithium salt, the cation is a lithium cation (Li⁺).

The solid state electrolyte further comprises an aluminium-based halogenated compound AlXₙ and/or a polymeric form thereof, wherein X is a halogen atom. Advantageously, n is between 1 and 6, for example between 1 and 3. Advantageously, X is chloride, bromide or iodide, preferably chloride. Advantageously, the polymeric form of AlXₙ is (AlXₙ)ₘ, wherein m is equal to or higher than 2.

Advantageously, X is chloride and n is 3, and the aluminium-based halogenated compound is AlCl₃. Advantageously, X is chloride, n is 3 and m is equal to or higher than 2, and the polymeric form of the aluminium-based halogenated compound is (AlCl₃)ₘ.

The solid state electrolyte further comprises a bis(fluorosulfonyl)imide (FSI) anion. The inventors have surprisingly discovered that the presence of an FSI anion in the SSE allows to maintain the solid state nature of the electrolyte comprising an aluminium-based halogenated compound AlXₙ and/or a polymeric form thereof.

Advantageously, and according to a first embodiment of the solid state electrolyte of the battery cells of the present disclosure, the anion of the metal salt is FSI. For example, when the metal of the metal salt is lithium (Li), the metal salt advantageously is LiFSI.

When the SSE of the first embodiment comprises at least one further metal salt, the anion of the at least one further metal salt advantageously is FSI, bis(trifluoromethane)sulfonimide (TFSI), dicyanamide (DCA), perchlorate (ClO₄), tetracholoroaluminate (AlCl₄), difluorobis(oxalato) borate (DFOB), or hexafluorophosphate (PF₆). Further examples include, without being limited thereto, difluorobis(oxalato) phosphate (DFBOP), tetrafluoroborate (BF₄), hexafluoroarsenic (AsF₆), tetrachloroaluminate (AlCl₄), trifluoromethanesulfonate (CF₃SO₃), and (fluoromethylsulfonyl)(trifluoromethylsulfonyl)imide (FTFSI). For example, the SSE can comprise two metal salts having a different cation and both having FSI as anion, for example LiFSI and NaFSI.

Advantageously, when the anion of the metal salt or of at least one of the two or more metal salts is FSI, the non-aqueous solvent(s) is (are) selected from the group consisting of nitrile, ether, ester, carbonate, sulfone, amide, and ionic liquids. Preferred examples, without being limited thereto, of the non-aqueous solvent(s) include acetonitrile, dimethoxyethane and ionic liquids. Further examples include propylene carbonate, ethylene carbonate, tetrahydrofuran, diethyl carbonate, γ-butyrolactone, 2-methyltetrahydrofuran, 1-3 dioxolane, tetramethyl sulfone (sulfolane), and dimethylsulfone (DMSO₂).

Ionic liquids are known in the field as being salts in liquid form at moderate temperature, without the need for the salt to be dissolved in another solvent. Ionic liquids typically are composed of ions - cations and anions. Advantageously, when the non-aqueous solvent is an ionic liquid, it comprises an organic cation and an inorganic or organic anion.

Advantageously, and according to a second embodiment of the solid state electrolyte of the battery cells of the present disclosure, the non-aqueous solvent is an ionic liquid, wherein the anion of the ionic liquid is FSI.

When the SSE according to the second embodiment comprises at least one further non-aqueous solvent, the at least one further non-aqueous solvent is advantageously selected from the group consisting of nitrile, ether, ester, carbonate, sulfone, amide, and ionic liquids. Preferred examples of the at least one further non-aqueous solvent include acetonitrile, dimethoxyethane and ionic liquids. Further examples include propylene carbonate, ethylene carbonate, tetrahydrofuran, diethyl carbonate, γ-butyrolactone, 2-methyltetrahydrofuran, 1-3 dioxolane, tetramethyl sulfone, and dimethylsulfone.

When one of the second or further non-aqueous solvents is an ionic liquid, the anion thereof advantageously is TFSI, DCA, ClO₄, PF₆, DFBOP, DFOB, BF₄, FTFSI, AlCl₄, AsF₆, or CF₃SO₃. For example, the SSE can comprise two ionic liquids as non-aqueous solvents, each having as anion FSI and having a different cation. Alternatively, each ionic liquid can have a different anion, one of them being FSI, and the same cation.

Advantageously, when the non-aqueous solvent or at least one of the two or more non-aqueous solvents is an ionic liquid having a FSI anion, the anion of the metal salt(s) of the SSE is TFSI, DCA, ClO₄, PF₆, DFBOP, DFOB, BF₄, FTFSI, AlCl₄, AsF₆, and CF₃SO₃.

A third embodiment of the solid state electrolyte of the battery cells of the present disclosure comprises a combination of the first and the second embodiment. In other words, according to the third embodiment, the anion of the metal salt or of at least one of the two or more metal salts, is FSI and the non-aqueous solvent, or at least one of the two or more non-aqueous solvents, is an ionic liquid, the anion thereof being FSI.

Advantageously, the battery cell further comprises a separator, such as a separator membrane, provided between the cathode and the anode current collector. The separator can be any separator known in the art.

Optionally, the battery cell further comprises an anode, i.e. the battery cell is an anode comprising battery cell. The anode can be any anode known in the art.

Advantageously, the anode comprises or substantially consists of a metallic layer comprising an alkali metal, an alkaline earth metal or a metal of Group Ib, Group IIb, or Group IIIa of the periodic table, or a combination of two or more thereof. Preferred examples of metals include lithium, sodium, magnesium, aluminium, zinc and silver.

Alternatively, and also advantageously, the anode comprises or substantially consists of an intercalation electrode. The intercalation electrode can be any electrode known in the art as suitable for being an anode.

Alternatively, and also advantageously, the anode comprises or substantially consists of a conversion electrode. The conversion electrode advantageously comprises an oxide, a nitride, a sulphide, or combinations of two or more thereof.

Optionally, the battery cell can further comprise a high surface area substrate provided between the cathode, or, when present, the separator, and the anode current collector or the electronic conductor, or, when present, the anode. Advantageously, the high surface area substrate, when present, is provided so that at least a portion of a surface of the high surface area substrate contacts at least a portion of a surface of anode current collector or the electronic conductor, or, when present, a surface of the anode.

When the battery cell comprises a high surface area substrate and does not comprise an anode, the battery cell comprising a high surface area substrate advantageously comprises an electronic conductor.

When the battery cell comprises an electronic conductor, it can further comprise an anode lead extension. Advantageously, when the battery cell comprises an anode lead extension, at least a portion of a surface of the electronic conductor contacts at least a portion of a surface of the anode lead extension.

Advantageously, the electronic conductor, when present, comprises or substantially consists of a metal, a polymer, carbon, an oxide, a sulphide, a nitride, a carbide, a silicide, or combinations of two or more thereof.

Advantageously, the battery cells according to the present disclosure are secondary batteries.

According to a second aspect of the invention, there is provided a battery as set out in the appended claims. The battery comprises a stack of x battery cells according to the first aspect of the present invention, wherein x is between 2 and 20, preferably between 2 and 10, such as between 2 and 5.

An advantage of the battery cells of the present disclosure includes, without being limited thereto, an enhanced life-time. In particular, the battery cells of the invention are capable of being charged and discharged many times, thereby providing a prolonged life-time. A further advantage is that, compared to battery cells of the art, they have an excellent conductivity and Coulombic efficiency, without the loss of the metal.

### Description of the figures

Aspects of the invention will now be described in more detail with reference to the appended drawings, wherein same reference numerals illustrate same features and wherein:
- Figure 1 schematically represents an anode-free metal battery cell according to the invention;
- Figure 2 schematically represents another anode-free metal battery cell according to the invention;
- Figure 3 schematically represents an anode comprising battery cell according to the invention;
- Figure 4 schematically represents another anode comprising battery cell according to the invention;
- Figure 5 schematically represents yet another anode-free metal battery cell according to the invention;
- Figure 6 schematically represents a further anode-free metal battery cell according to the invention;
- Figure 7 schematically represents yet a further anode-free metal battery cell according to the invention;
- Figure 8 represents the voltage of an anode-free battery cell of the invention in function of the specific charge per gram of active material;
- Figure 9 represents the voltage of an anode comprising battery cell of the invention in function of the specific charge per gram of active material for repeated charging and discharging of the battery cell;
- Figure 10 represents the specific charge per gram of active material of two anode comprising battery cells of the invention in function of the number of charging/discharging cycles;
- Figure 11 represents the specific charge per gram of active material of two anode comprising battery cells of the invention in function of the number of charging/discharging cycles; and
- Figure 12 represents the voltage of an anode comprising battery cell of the invention in function of the specific charge per gram of active material.

### Detailed description of the invention

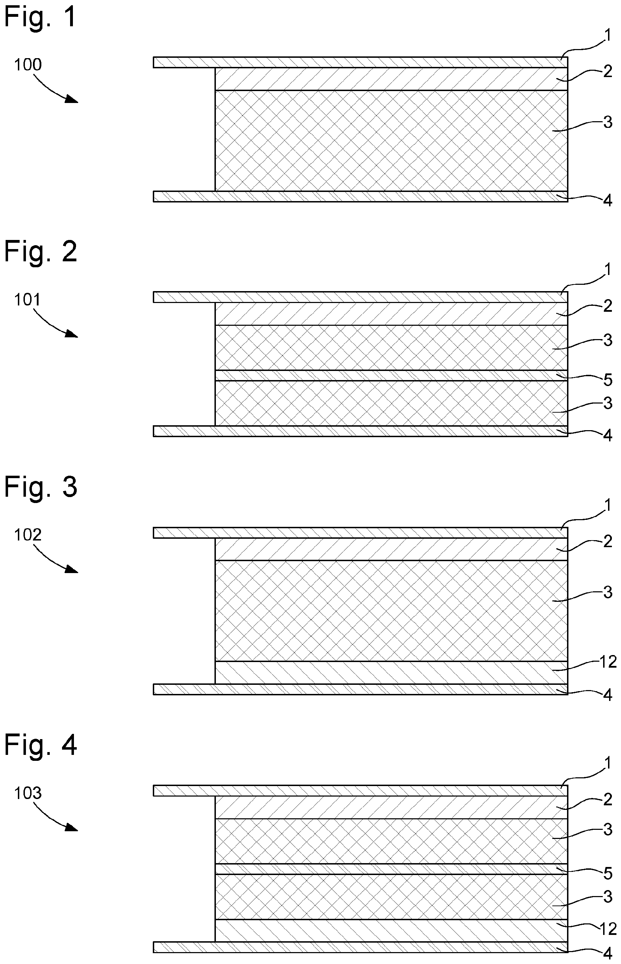

Figure 1 shows schematically a first embodiment of a battery cell 100 of the present disclosure. The battery cell 100 comprises a cathode current collector 1, a cathode 2, a solid state electrolyte 3 and an anode current collector 4. The battery cell 100 does not comprise an anode, i.e. the battery cell 100 is an anode-free metal battery cell. As is known in the art, during the first charging of the anode-free metal battery cell, a metallic layer as anode is formed (deposited) in situ onto the anode current collector.

In the present disclosure, the terms anode-free metal battery cell and anode-free battery cell are used interchangeably. Advantageously, the "metal" in anode-free metal battery cell refers to the metal present in the cathode, i.e. the metal of which its ions, i.e. metal ions, are passing through the electrolyte for the in situ deposition of an anode layer on the anode current collector.

Advantageously, the metal is an alkali metal, an alkaline earth metal or a metal of Group Ib, Group IIb, or Group IIIa of the periodic table. Advantageously, the alkali metal is lithium or sodium. Advantageously, the alkaline earth metal is magnesium. Advantageously, the Group Ib metal is silver (Ag) or gold (Au). Advantageously, the Group IIb metal is zinc (Zn) or cadmium (Cd). Advantageously, the Group IIIa metal is aluminium (Al). Preferred examples of metals include lithium, sodium, magnesium and aluminium.

Advantageously, the cathode current collector 1 is as described hereinabove. Advantageously, and as is known in the art, the cathode current collector 1 extends from the anode-free battery cell 100. In other words, the cathode current collector 1 advantageously has a portion extending from the stack comprising the cathode 2, the electrolyte 3, and the anode current collector 4. This can be realised by means of methods known in the art, for example by providing a cathode current collector 1 having a surface area that is larger than the surface area of the cathode 2. As is known, such an extension allows easy connection or coupling of the cathode current collector 1 to the electronic circuitry (not shown) to which the anode current collector 4 is advantageously also connected or coupled.

Advantageously, the cathode 2 is as described hereinabove. Advantageously, the active material advantageously comprises or substantially consists of an alkali metal, an alkaline earth metal or a metal of Group Ib, Group IIb, or Group IIIa of the periodic table. Advantageously, the alkali metal is lithium or sodium. Advantageously, the alkaline earth metal is magnesium. Advantageously, the Group Ib metal is silver (Ag) or gold (Au). Advantageously, the Group IIb metal is zinc (Zn) or cadmium (Cd). Advantageously, the Group IIIa metal is aluminium (Al). Preferred examples of metals include lithium, sodium, magnesium and aluminium.

Alternatively or additionally, and advantageously, the active material can comprise or substantially consist of an alkali metal-, alkaline earth metal-, or Group Ib, Group IIb or Group IIIa metal-based intercalation compound. Non-limiting examples of intercalation compounds include lithium iron phosphate (LFP) and sodium iron phosphate (NFP). Further non-limiting examples of active materials are lithium nickel cobalt aluminium oxide (NCA), lithium nickel cobalt manganese oxide (NMC), lithium manganese oxide (LMO), lithium nickel manganese oxide (LNMO) and lithium cobalt oxide (LCO).

Advantageously, the cathode comprises between 25 % and 99.7 % by weight of the active material based on the total weight of the cathode, such as between 40 % and 99.5 % by weight, preferably between 50 % and 99 % by weight, for example between 60 % and 97.5 % by weight, more preferably between 75 % and 95 % by weight.

Advantageously, the electronically conductive material comprises a carbon-comprising material, such as carbon fibres, carbon nanotubes, particulate carbon (e.g. a powder), or a combination of two or more thereof. Advantageously, the electronically conductive material is a carbon-based electronically conductive material, such as graphite.

Advantageously, the cathode comprises between 0.1 % and 30 % by weight of the electronically conductive material based on the total weight of the electrode, such as between 0.25 % and 25 % by weight, preferably between 0.5 % and 20 % by weight, for example between 1 % and 15 % by weight, more preferably between 2 % and 10 % by weight.

Advantageously, the binder comprises or substantially consists of rubber, such as styrene-butadiene rubber (SBR) or latex, polyvinylidene fluoride (PVDF), and polyvinylpyrolidone (PVP), in particular high molecular weight PVP.

Advantageously, the cathode comprises between 0.1 % and 30 % by weight of the binder based on the total weight of the cathode, such as between 0.25 % and 25 % by weight, preferably 0.5 % and 20 % by weight, for example between 0.75 % and 15 % by weight, more preferably between 1 % and 10 % by weight.

The solid state electrolyte 3 is advantageously as described hereinabove, and comprises a non-aqueous solvent, an aluminium-based halogenated compound AlXₙ and/or a polymeric form thereof, wherein X is a halogen atom and n is between 1 and 6, a metal salt of an alkali metal, an alkaline earth metal or a metal of Group Ib, Group IIb, or Group IIIa of the periodic table, and a bis(fluorosulfonyl)imide (FSI) anion.

The metal or metals comprised in the active material of the cathode 2 and the metal or metals comprised in the SSE 3 as cation of the metal salt(s) can be the same or different. Advantageously, they are the same. For example, without being limited thereto, battery cell can comprise lithium cobalt oxide (LiCoO₂) as active material of the cathode and LiFSI as metal salt of the solid state electrolyte.

Advantageously, the anode current collector 4 comprises or substantially consists of at least one metal. Advantageously, the metal is copper, a copper alloy, nickel, a nickel alloy, steel or lithium. The steel can be, without being limited thereto, stainless steel or carbon steel.

Advantageously, the anode current collector 4 extends from the anode-free battery cell 100. In other words, the anode current collector 4 advantageously has a portion extending from the stack that comprises the cathode current collector 1, the cathode 2, and the solid state electrolyte 3. Such an extension allows easy connection or coupling of the anode current collector 4 to the electronic circuitry (not shown) to which the cathode current collector 1 is advantageously also connected or coupled.

Figure 2 shows schematically a second embodiment of a battery cell 101 of the present disclosure, which does not comprise an anode, i.e. is an anode-free battery cell. The anode-free metal battery cell 101 comprises a cathode current collector 1. Advantageously, the cathode current collector 1 is as described hereinabove. The battery cell 101 further comprises a cathode 2. Advantageously, the cathode 2 is as described hereinabove. The battery cell 101 further comprises an anode current collector 4. The anode current collector 4 is advantageously as described hereinabove. The anode-free battery cell 101 also comprises a solid state electrolyte 3. The solid state electrolyte 3 is as described hereinabove.

The anode-free metal battery cell 101 further comprises a separator 5. Advantageously, the separator 5 is as described hereinabove. Advantageously, the separator 5 is a separator membrane, i.e. a battery separator membrane. The separator 5 can be a porous separator membrane.

Advantageously, the separator 5 comprises or substantially consists of one or more polymers. Advantageously, and alternatively or additionally, the battery separator membrane 5 may be a ceramic material. For example, the separator 5 can comprise a ceramic-loaded polymer.

Non-limiting examples of suitable polymers include polypropylene (PP), polyethylene (PE), polytetrafluoroethylene (PTFE) and polyvinylidenedifluoride (PVDF). PP, PE, PTFE and PVDF are preferred materials because of their chemically inert character. However they are not easily wetted, while it is preferred that the porous separator may absorb the liquid electrolyte. To this end the PP, PE, PTFE and/or PVDF may be treated with a surface treatment or a coating, such as a spray coating, a dip coating or a plasma coating - atmospheric pressure plasma or low pressure plasma.

The separator 5 can comprise one or a plurality of layers. A multilayer separator of particular interest is a tri-layer PVDF-PE-PVDF separator, optionally ceramic loaded.

Figure 3 shows schematically a further battery cell 102 of the present disclosure. The battery cell 102 comprises a cathode current collector 1, which is advantageously as described hereinabove. The battery cell 102 further comprises a cathode 2, which is advantageously as described hereinabove. The battery cell 102 also comprises a solid state electrolyte 3, which is as described hereinabove. The battery cell 102 also comprises an anode current collector 4. The anode current collector 4 is advantageously as described hereinabove.

The battery cell 102 further comprises an anode 12, i.e. the battery cell 102 is an anode comprising battery cell. The anode 12 is advantageously as described hereinabove.

Advantageously, the anode comprises or substantially consists of a metallic layer. The metal of the metallic layer can be the same or different as one of the metals comprised in the cathode, e.g. in the active material of the cathode. Further, the metal(s) of the metallic layer can be the same or different as the metal of the metal salt(s) of the solid state electrolyte. Advantageously, at least one metal of the metallic layer is the same as a metal of the cathode. For example, when the cathode comprises lithium, the anode advantageously is a metallic layer comprising or substantially consisting of lithium.

Alternatively, and also advantageously, the anode comprises or substantially consists of an intercalation anode. Non-limiting examples of suitable intercalation electrodes include graphite and Li₄Ti₅O₁₂, or combinations thereof.

Alternatively, and also advantageously, the anode comprises or substantially consists of a conversion electrode. Advantageously, the conversion electrode comprises or substantially consists of an oxide, a nitride a sulphide, or combinations of two or more thereof. Non limiting examples of oxides include LiVO₂ and SnO₂. Non-limiting examples of nitrides include vanadium nitride (VN) and molybdenum nitride (δ-MoN). Non-limiting examples of sulphides include tin sulphide (SnSₓ) and vanadium sulphide (VS₂ and VS₄).

Advantageously, the anode can be provided by means known in the art, such as by providing a film, sheet or foil, or by deposition of a layer by known methods, such as sputtering and plasma deposition.

Figure 4 shows schematically another anode comprising battery cell 103 of the present disclosure. The battery cell 103 comprises a cathode current collector 1, a cathode 2, a solid state electrolyte 3, an anode current collector 4, an anode 12 and a separator 5, which are all advantageously as described hereinabove.

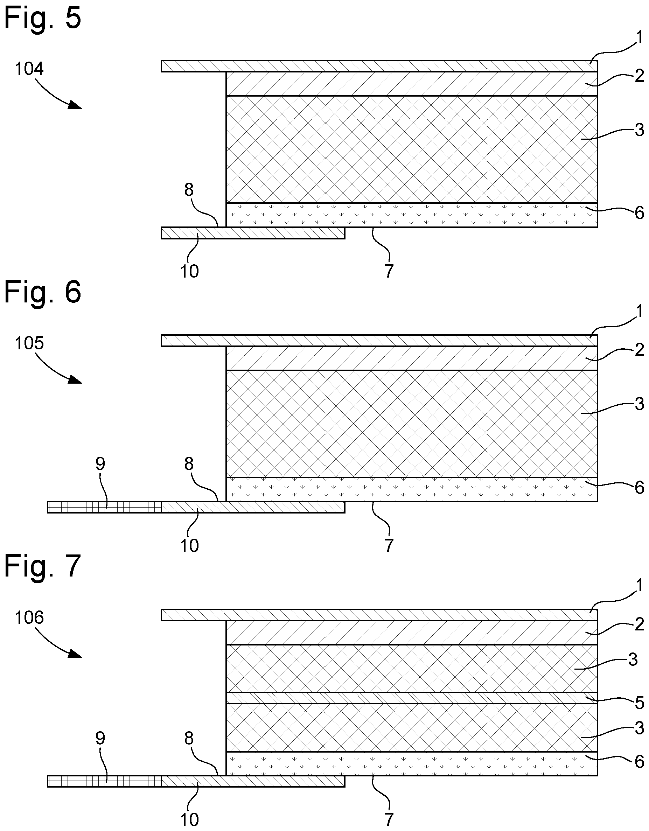

Figure 5 shows schematically a third embodiment of an anode-free metal battery cell 104 of the present disclosure. The anode-free metal battery cell 104 comprises a cathode current collector 1, a cathode 2, and a solid state electrolyte 3, which are all advantageously as described hereinabove. The battery cell 104 can further comprise a separator (not shown).

The battery cell 104 further comprises an electronic conductor 10. The electronic conductor 10 is advantageously as hereinabove described. The electronic conductor 10 advantageously functions as anode current collector.

Advantageously, the electronic conductor 10 comprises or substantially consists of at least one metal. Advantageously, the metal is copper, a copper alloy, nickel, a nickel alloy, lithium, a lithium alloy, or steel. The steel can be, without being limited thereto, stainless steel or carbon steel. For example, the electronic conductor can comprise a nickel-plated copper foil.

Alternatively, and alternatively or additionally, the electronic conductor 10 comprises or substantially consists of a polymer. Preferred examples of polymers, without being limited thereto, include poly(3,4-ethylenedioxythiophene) (PEDOT) and polyaniline.

Alternatively, and alternatively or additionally, the electronic conductor 10 comprises or substantially consists of carbon. Preferred examples of carbon, without being limited thereto, include carbon black, carbon nanotubes, graphite or a combination of two or more thereof.

Alternatively, and alternatively or additionally, the electronic conductor 10 comprises or substantially consists of one or more of an oxide, a sulphide, a nitride, a carbide, or a silicide.

The anode-free metal battery cell 104 further comprises a high surface area substrate 6. Advantageously, the high surface area substrate 6 is provided at the anode side of the battery cell 104. In other words, the high surface area substrate 6 is advantageously provided at a side of the electrolyte 3 opposite the side of the cathode 2.

Advantageously, the high surface area substrate 6 is provided so that at least a portion of a(n external) surface 7 thereof contacts at least a portion of a surface 8 of the electronic conductor 10. Advantageously, the surface 7 of the high surface area substrate 6 contacting at least partially the electronic conductor 10 is different from the surface contacting the SSE 3.

Advantageously, the high surface area substrate 6 has a porosity of at least 40 %, wherein the porosity is measured by X-ray computed tomography. With "a porosity of at least 40 %" is meant in the light of the present disclosure that the high surface area substrate 6 has a porosity of at least 40 % at every location or area of the substrate 6.

Advantageously, the high surface area substrate 6 comprises or substantially consists of an organic compound. Advantageously, the organic compound comprises or substantially consists of, i.e. is, a polymer. Alternatively, and advantageously, the organic compound comprises or substantially consists, i.e. is, a polymorph of carbon.

Advantageously, the polymer is selected from the group consisting of cellulose, regenerated cellulose (viscose), polypropylene, polyethylene, polyvinylidene difluoride, polytetrafluoroethylene, polyurethane, aramide, and silk. Further examples of the organic compound include wool and polyaramide.

Non-limiting examples of a polymorph of carbon include graphene, carbon nanotubes, graphite, hard carbon, and carbon black.

Advantageously, and additionally or alternatively, the high surface area substrate comprises or substantially consists of an inorganic compound. Advantageously, the inorganic compound comprises or substantially consists of lithium lanthanum zirconium oxide (LLZO) and/or a silica polymorph. Non-limiting examples of silica polymorphs include quartz, cristobalite, tridymite, coesite, stishovite, lechatelierite, and opal.

The high surface area substrate 6 can comprise or consist of a single layer, or can comprise a plurality of layers, i.e. two or more layers. When the high surface area substrate 6 comprises two or more layers, they can be the same or different. For example, they can have the same or a different composition, structure, shape, thickness or porosity. Advantageously, each layer has a porosity of at least 40 %, wherein the porosity is measured by means of X-ray tomography.

The high surface area substrate 6 can have any shape or geometry or structure providing the substrate with a high surface area. Advantageously, the high surface area substrate 6 is a membrane, a foam, a nonwoven, a woven textile or a knitted textile. Advantageously, the membrane and the foam are open cell membranes and foams.

Figure 6 shows another anode-free metal battery cell 105 according to the present disclosure. The anode-free metal battery cell 105 comprises a cathode current collector 1, a cathode 2, a solid state electrolyte 3, an electronic conductor 10 and a high surface area substrate 6, which are all advantageously as described hereinabove for Figure 5.

The battery cell 105 further comprises an anode lead extension 9. Advantageously, the anode lead extension 9 extends from the anode-free battery cell 105, advantageously in a way as described hereinabove for the anode current collector.

Advantageously, the anode lead extension 9 comprises or substantially consists of at least one metal. Advantageously, the metal is copper, a copper alloy, nickel, a nickel alloy, steel or lithium. The steel can be, without being limited thereto, stainless steel or carbon steel.

Advantageously, at least a portion of a surface 8 of the electronic conductor 10 contacts at least a portion of a surface 7 of the high surface area substrate 6. Advantageously, the surface 7 of the high surface area substrate 6 which is at least partially in contact with the electronic conductor 10 is different from the surface of the high surface area substrate 6 contacting the electrolyte 3.

Advantageously, at least a portion of a surface of the electronic conductor 10 also contacts at least a portion of a surface of the anode lead extension 9.

Figure 7 shows another anode-free metal battery cell 106 according to the present disclosure. The anode-free metal battery cell 106 comprises a cathode current collector 1, a cathode 2, a solid state electrolyte 3, a separator 5, a high surface area substrate 6, an anode lead extension 9, and an electronic conductor 10, which are all advantageously as described hereinabove.

### Examples

### Example 1

A liquid precursor was prepared by adding 12.65 g LiFSI as a first metal salt, 19.42 g LiTFSI as a second metal salt, 3.00 g AlCl₃, and 2.02 g HFE as surfactant in 20.25 g DME as non-aqueous solvent.

The anode-free battery cell was prepared as bi-stack pouch cell comprising two copper foils as anode current collectors sandwiching a cathode comprising NCA as active material. A three-layer ceramic loaded separator, comprising one layer of polyethylene sandwiched between two layers of polyvinylidene fluoride, was provided between the cathode and the anode current collector.

The liquid precursor was then provided within the anode-free battery cell, and kept at 60 °C for 24h to convert the liquid precursor into a solid state electrolyte. The SSE comprised 22.07 % by weight LiFSI, 33.87 % by weight LiTFSI, 5.23 % by weight AlCl₃, 3.53 % by weight HFE, and 35.31 % by weight DME, based on the total weight of the SSE.

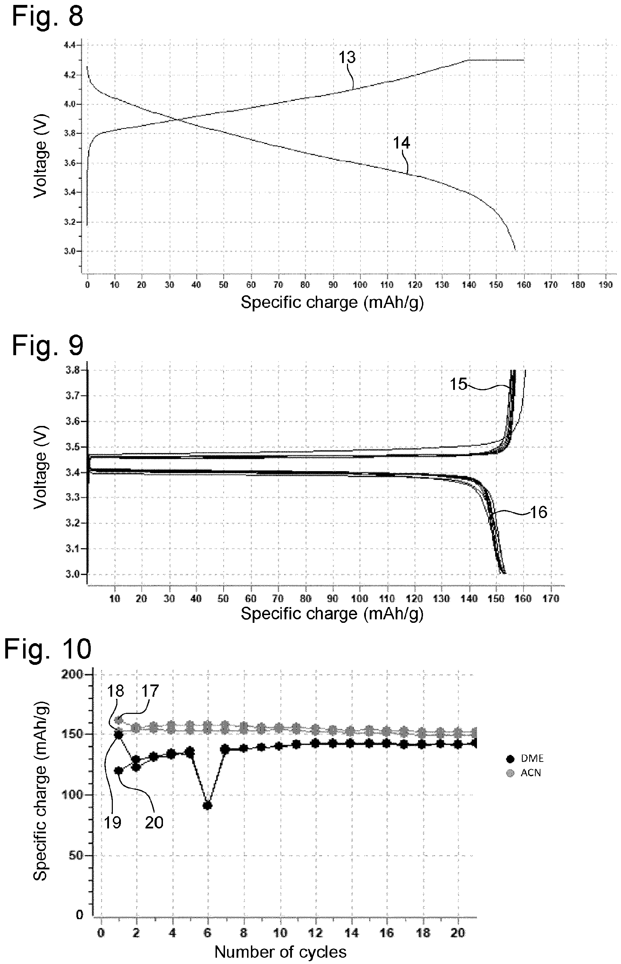

The battery cell was then charged and discharged at 5 mA galvanostatically (0.39 mA/cm² with respect to the cathode surface) and the cell potential was measured at room temperature as function of the specific charge per gram of active material. Figure 8 shows the results, wherein line 13 represents the charging curve and line 14 the discharging curve. From Figure 8 it is clear that 158 mAh/g of the expected 170 mAh/g are usable. In other words, only 12 mAh/g are lost in the initial in-situ lithium deposition.

### Example 2

A liquid precursor was prepared by adding 16.00 g LiFSI as metal salt, 2.66 g AlCl₃ and 2.00 g HFE as surfactant in 8.00 g acetonitrile (ACN). The liquid precursor was then kept for 24 hours at a temperature of 20 °C, so that a solid state electrolyte (SSE) was obtained.

The SSE comprised 55.83 % by weight LiFSI, 9.28 % by weight AlCl₃, 6.98 % by weight HFE and 27.91 % by weight ACN, based on the total weight of the SSE.

A first battery cell (anode comprising) was prepared as bi-stack pouch cell comprising an aluminium foil (Al) as cathode current collector sandwiched between 2 lithium iron phosphate (LFP) cathodes. A copper foil as anode current collector with a 50 µm thick lithium foil as anode was provided at each side of the LFP-Al-LFP compound. A three-layer ceramic loaded separator, comprising one layer of polyethylene sandwiched between two layers of polyvinylidene fluoride, was provided between the cathode and each one of the anodes (so in total two separators were provided).

The anodes and cathodes were impregnated with the solid state electrolyte by application thereof onto the substrates of the anodes and cathodes with a spatula until the entire surface was covered uniformly with the SSE.

The first battery cell was then subjected to 10 charging/discharging cycles. Charging and discharging was performed galvanostatically between 3.0 V and 3.8 V at 0.25 mA/cm² cathode surface.

Figure 9 shows the voltage as a function of the specific charge per gram of active material for the charging/discharging cycles, wherein 15 refers to the charging curves and 16 to the discharging curves. It is clear that the charging and discharging is very stable for the 10 cycles.

### Example 3

A suspension was prepared by adding 10.02 g LiFSI as metal salt, 1.90 g AlCl₃, and 1.25 g HFE as surfactant in 10.00 g DME as non-aqueous solvent.

The suspension was then heated at 60 °C for 10 minutes to obtain a liquid precursor. The liquid precursor was then kept for 24 hours at a temperature of 20 °C, so that a solid state electrolyte (SSE) was obtained.

The SSE comprised 43.24 % by weight LiFSI, 8.20 % by weight AlCl₃, 5.40 % by weight HFE and 43.16 % by weight DME, based on the total weight of the SSE.

A second battery cell (anode comprising) was prepared as bi-stack pouch cell comprising an aluminium foil (Al) as cathode current collector sandwiched between 2 lithium iron phosphate (LFP) cathodes. A copper foil as anode current collector with a 50 µm thick lithium foil as anode was provided at each side of the LFP-Al-LFP compound. A three-layer ceramic loaded separator, comprising one layer of polyethylene sandwiched between two layers of polyvinylidene fluoride, was provided between the cathode and each one of the anodes (so in total two separators were provided).

The anodes and cathodes were impregnated with the solid state electrolyte by application thereof onto the substrates of the anodes and cathodes with a spatula until the entire surface was covered uniformly with the SSE.

The first battery cell was then subjected to 20 charging/discharging cycles. Charging and discharging was performed galvanostatically between 3.0 V and 3.8 V at 0.25 mA/cm² cathode surface.

Figure 10 shows the specific charge per gram of active material of the first battery cell of Example 2 and the second battery cell of Example 3 as a function of the number of charging and discharging cycles. It is clear that the anodic capacity 17, referring to the charging of the (first) battery cell, and the cathodic capacity 18, referring to the discharging of the (first) battery cell of the first battery cell with ACN as non-aqueous solvent are very close together and remain substantially constant for at least 20 charging/discharging cycles. Although the anodic capacity 19, referring to the charging of the (second) battery cell, and the cathodic capacity 20, referring to the discharging of the (second) battery cell, of the second battery cell with DME as non-aqueous solvent being a bit lower than for the first battery cell, they also remain stable with each further charging/discharging cycle, up to at least 20 cycles.

### Example 4

A liquid precursor was prepared by adding 10.00 g LiFSI as metal salt, 2.01 g AlCl₃, and 2.50 g HFE as surfactant in 20.00 g DME as non-aqueous solvent.

A stacked anode comprising battery cell of 900 mAh was prepared with 5 layers of LFP-Al-LFP (i.e. an aluminium foil (Al) as cathode current collector sandwiched between 2 lithium iron phosphate (LFP) cathodes). A 13 µm thick copper foil as anode current collector with a 25 µm thick lithium foil as anode was provided at each side of the LFP-Al-LFP compound, hence 6 of these were provided. A three-layer ceramic loaded separator, comprising one layer of polyethylene sandwiched between two layers of polyvinylidene fluoride, was provided between each cathode and anode.

The liquid precursor was then provided within the battery cell, and kept at 60 °C for 48h to convert the liquid precursor into a solid state electrolyte. The SSE comprised 28.99 % by weight LiFSI, 5.82 % by weight AlCl₃, 7.24 % by weight HFE, and 57.95 % by weight DME, based on the total weight of the SSE.

The battery cell was then charged and discharged at 120 mA galvanostatically between 3.0 V and 3.8 V (0.25 mA/cm² with respect to the cathode surface).

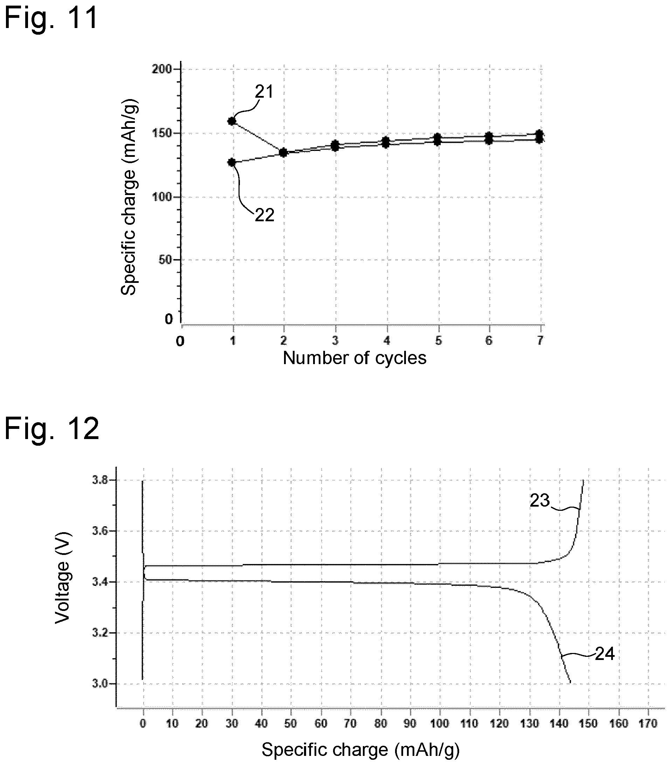

Figure 11 shows the specific charge per gram of active material of the battery cell as a function of the number of charging and discharging cycles. It is clear that the anodic capacity 21, referring to the charging of the battery cell, and the cathodic capacity 22, referring to the discharging of the battery cell, are very close together and remain substantially constant for at least 7 charging/discharging cycles. The difference in anodic and cathodic capacity for the first cycle can be explained by the known fact that a part of the first cycle capacity in electrochemical systems is irreversible.

Figure 12 shows the voltage of the battery cell as a function of the specific charge per gram of active material for the first charging (line 23) and the subsequent discharging (line 24). The results clearly show the scaling up potential of the solid state battery cell.

### Nomenclature

- 1.: cathode current collector
- 2.: cathode
- 3.: solid state electrolyte
- 4.: anode current collector
- 5.: separator
- 6.: high surface area substrate
- 7.: surface of the high surface area substrate
- 8.: surface of the anode current collector
- 9.: anode lead extension
- 10.: electronic conductor
- 12.: anode
- 13.: charging curve of anode-free battery cell
- 14.: discharging curve of anode-free battery cell
- 15.: charging curves of a first anode comprising battery cell
- 16.: discharging curves of a first anode comprising battery cell
- 17.: anodic capacity of a first anode comprising battery cell
- 18.: cathodic capacity of a first anode comprising battery cell
- 19.: anodic capacity of a second anode comprising battery cell
- 20.: cathodic capacity of a second anode comprising battery cell
- 21.: anodic capacity of a stacked anode comprising battery cell
- 22.: cathodic capacity of a stacked anode comprising battery cell
- 23.: charging curve of a stacked anode comprising battery cell
- 24.: discharging curve of a stacked anode comprising battery cell
- 100.: anode-free metal battery cell
- 101.: anode-free metal battery cell
- 102.: anode comprising battery cell
- 103.: anode comprising battery cell
- 104.: anode-free metal battery cell
- 105.: anode-free metal battery cell
- 106.: anode-free metal battery cell

## Claims

1. Battery cell (100, 101, 102, 103, 104, 105, 106) comprising a cathode current collector (1), a cathode (2), a solid state electrolyte (3), and further comprising an anode current collector (4) or an electronic conductor (10),
**characterized in that** the solid state electrolyte (3) comprises a non-aqueous solvent, an aluminium-based halogenated compound AlXₙ and/or a polymeric form thereof, wherein X is a halogen atom and n is between 1 and 6, a metal salt of an alkali metal, an alkaline earth metal or a metal of Group Ib, Group IIb, or Group IIIa of the periodic table, and a bis(fluorosulfonyl)imide (FSI) anion.

2. Battery cell (100, 101, 102, 103, 104, 105, 106) according to claim 1, wherein the metal is lithium, sodium, magnesium, aluminium, zinc or silver.

3. Battery cell (100, 101, 102, 103, 104, 105, 106) according to any one of the preceding claims, wherein X is chloride and n is 3, and the aluminium-based halogenated compound is AlCl₃.

4. Battery cell (100, 101, 102, 103, 104, 105, 106) according to any preceding claim, wherein the metal salt comprises an anion, wherein the anion of the metal salt is FSI.

5. Battery cell (100, 101, 102, 103, 104, 105, 106) according to claim 4, further comprising at least one further metal salt comprising an anion, wherein the anion of the at least one further metal salt is FSI, bis(trifluoromethane)sulfonimide (TFSI), dicyanamide (DCA), perchlorate (ClO₄), difluorobis(oxalato) borate (DFOB), or hexafluorophosphate (PF₆).

6. Battery cell (100, 101, 102, 103, 104, 105, 106) according to any one of the claims 4 to 5, wherein the non-aqueous solvent is acetonitrile, dimethoxyethane, or an ionic liquid.

7. Battery cell (100, 101, 102, 103, 104, 105, 106) according to any one of the preceding claims, wherein the non-aqueous solvent is an ionic liquid comprising an anion, wherein the anion of the ionic liquid is FSI.

8. Battery cell (101, 103, 106) according to any one of the preceding claims, further comprising a separator (5) between the cathode (2) and the anode current collector (4) or the electronic conductor (10).

9. Battery cell (102, 103) according to any one of the preceding claims, further comprising an anode (12).

10. Battery cell (102, 103) according to claim 9, wherein the anode (12) comprises a metallic layer comprising an alkali metal, an alkaline earth metal or a metal of Group Ib, Group IIb, or Group IIIa of the periodic table, or a combination of two or more thereof.

11. Battery cell (102, 103) according to claim 9, wherein the anode (12) comprises an intercalation electrode or a conversion electrode, preferably wherein the conversion electrode comprises an oxide, a nitride, a sulphide or combinations of two or more thereof.

12. Battery cell (104, 105, 106) according to any one of the preceding claims, further comprising a high surface area substrate (6) provided between the cathode (2), or, when present, the separator (5), and the anode current collector (4) or the electronic conductor (10), or, when present, the anode (12), wherein at least a portion of a surface (7) of the high surface area substrate (6) contacts at least a portion of a surface of the anode current collector (4) or the electronic conductor (10), or, when present, a surface of the anode (12).

13. Battery cell (105, 106) according to claim 12, comprising an electronic conductor (10), further comprising an anode lead extension (9), wherein at least a portion of a surface of the electronic conductor (10) contacts at least a portion of a surface of the anode lead extension (9).

14. Battery cell (100, 101, 102, 103, 104, 105, 106) according to any one of the preceding claims, wherein the battery cell (100, 101, 102, 103, 104, 105, 106) is a secondary battery cell.

15. Battery comprising a stack of x battery cells (100, 101, 102, 103, 104, 105, 106) according to any one of the preceding claims, wherein x is between 2 and 20.
